# EUROPEAN PATENT APPLICATION

(11) **EP 4 375 876 A1**
(43) Date of publication of application: **29.05.2024**
(21) Application number: 22208790.0
(22) Date of filing: 22.11.2022
(51) Int. Cl.: G06N 3/045, G06N 3/09

(54) **COMPUTER IMPLEMENTED METHODS**

(71) Applicant: Hitachi, Ltd., Tokyo 100-8280 (JP)
(72) Inventor: AH KUN, Leo, London, EC2Y 5AJ (GB); YOSHIDA, Eiji, London, EC2Y 5AJ (GB)
(74) Representative: Mewburn Ellis LLP

(57) **Abstract**

A computer-implemented method of identifying faults in a railway network. The method comprising the steps of: receiving true input data, the true input data including a representation of a verified fault in a railway network; generating synthetic input data, based on the true input data, representing faults that may occur in the railway network; training a first machine-learning model using the true input data and the synthetic input data, such that the machine-learning model can be used to identify faults from new input data relating to the railway network; and applying the trained first machine-learning model to a database, and so identifying faults represented by the new input data.

## Description

### Field of the Invention

The present invention relates to computer implemented methods of identifying faults in a railway network and a railway vehicle configured to identify faults in a railway network.

### Background

Railway networks are known to develop faults. Such faults may arise as a result of running trains along the network (i.e. wear-related faults) or may arise due to external factors such as weather conditions, land instability (i.e. environmental-related faults) or may be faults intrinsic to the railway network (e.g. a control fault). Often, faults develop over time, such that a fault may initially have a low importance or impact with respect to the operation of the network, but may develop to have a high importance or impact with respect to the operation of the network if it is not remedied.

Railway networks can be monitored using a range of different sensors in order to identify faults. Existing systems rely on human processing to analyse data collected by the sensor and identify if and where faults are present in the railway network.

Conventionally, a low-importance fault may go undetected by a human analyst until the fault develops into high-importance fault, at which point the fault may impact the operation of the network. Moreover, human analysis typically only relies on a single type of information from a single sensor (commonly image data), which impacts the accuracy and reliability of fault identification.

The present invention has been devised in light of the above considerations.

### Summary

It is desired to provide a method of identifying faults in a railway network that is able to more accurately and reliably identify a fault at an early stage of that fault developing, such that remedial action can be taken before the fault impacts the operation of the network.

Accordingly, in a first aspect of the present disclosure, there is provided a computer-implemented method of identifying faults in a railway network. The computer implemented method according to the first aspect comprises the steps of: receiving true input data, the true input data including a representation of a verified fault in a railway network; generating synthetic input data, based on the true input data, representing faults that may occur in the railway network; training a first machine-learning model using the true input data and the synthetic input data, such that the machine-learning model can be used to identify faults from new input data relating to the railway network; and applying the trained first machine-learning model to a database, and so identifying faults represented by the new input data.

Advantageously, a computer implemented method according to the first aspect provides a method of accurately and reliably identifying unlabelled faults captured in new input data using a computer. The present method is able to do so by generating a dataset of synthetic input data from a dataset of true input data, the synthetic input data augmenting the training data available for the first machine-learning model.

The database of new input data may comprise further true input data. Advantageously, a method applying the trained first machine-learning model to such a database can be used to verify the performance of the first machine-learning model.

By 'faults that may occur in the railway network' it may be meant data representing faults which have not occurred in the network but can in principle i.e. theoretical or hypothetical faults. The machine-learning model, once trained, is applicable to identify faults from new input data relating to the same railway network from which the true input data originated or a further railway network which is susceptible to the same kinds of fault.

In a second aspect of the present disclosure there is provided a computer implemented method of identifying faults in a railway network. The computer implemented method according to the second aspect comprises: receiving new input data, the new input data relating to the railway network; and applying a trained first machine-learning model to the new input data to identify unlabelled faults represented by the new input data. The first machine-learning model of the method according to the second aspect has been trained by the steps of: receiving true input data, the true input data including a representation of a verified fault in a railway network; generating synthetic input data, based on the true input data, representing faults that may occur in the railway network; and training the first machine-learning model using the true input data and the synthetic input data, such that the machine-learning model can be used to identify faults from new input data relating to the railway network. Advantageously, a computer implemented method according to the second aspect provides method of accurately and reliably identifying unlabelled faults captured in new input data using a computer.

In a method according to the second aspect, the new input data may be in a database and the trained first machine-learning model may be applied to the database.

The types of fault in the railway network to be identified by the method of the first or second aspect may include track-side faults and/or infrastructure faults. The track-side faults may include one or more of: fracturing of track rails; surface irregularities on track rails; warping of track rails; buckling of track rails; subsidence of track; sleeper failure; signalling equipment failure; points failure; track obstruction; and overhead obstruction. Infrastructure faults may include one or more of: a fault in a tunnel; a fault on a bridge; and signs of land slip or embankment failure.

In a method according to the first or second aspect, the true input data may further include a corresponding label classifying the fault in the representation; and the step of generating synthetic input data may be based on the representation and the label in the true input data. Advantageously, including a label classifying the fault in the true input data and basing the generation of the synthetic input data on this label allows the synthetic input data to be of the same class of fault as in the true input data.

The steps of training the first machine-learning model may further include pre-processing the true input data before generating the synthetic input data based on the true input data. For example, cropping and/or splitting the true input data such that smaller packages of pre-processed true input data are used when generating the synthetic input data.

In a method according to the first or second aspect, the step of generating the synthetic input data may be performed by providing the true input data to a second machine-learning model that is a generative machine-learning model. Advantageously, by using a second machine-learning model that is a diffusion model, transformer model or generative machine-learning model, synthetic input data that is more akin to the true input data is generated, resulting in better training of the first machine-learning model using the true input data and the synthetic input data and thus more reliable and accurate identification of unlabelled faults represented by the new input data.

In a method according to the first or second aspect, the step of generating the synthetic input data may include: transforming the representation of a verified fault in the true input data from a first data type into a second data type; and generating synthetic input data based on the true input data of the second data type. The second data type may comprise a textual data format. Advantageously it is easier to generate synthetic input data from true input data in a textual data type than from other data types.

In a method according to the first or second aspect, transforming the representation of a verified fault of the first data type in the true input data into the representation of a verified fault of the second data type is performed via a third machine-learning model. Advantageously, this use of a machine-learning model provides a representation of the verified fault in the second data type that is a more detailed representation of the representation of the verified fault in the first data type than if a machine-learning model is not used to transform between data types.

The synthetic input data generated based on the true input data of the second data type may be synthetic input data of the first data type and the new input data may be of the first data type. By generating the synthetic input data of the first data type and training the first machine-learning model using the first data type, the first machine-learning model is trained on a data type that matches the data type that the new input data will be in, improving the reliability and accuracy of the identification of unlabelled faults represented by the new input data.

The first data type may comprise one or more of an image data format, a video data format, an audio data format, and a numerical data format; and the second data type may comprise a textual data format. The first data type being image data means that the sensor used to provide the true input data and new input data can be a camera. Furthermore, machine learning techniques for processing image data and textual data are already highly developed and sophisticated, allowing high-quality synthetic input data to be generated. Alternatively, the second data type may be textual data and the first data type may encompass any type of data that is not textual data.

The first machine-learning model may be a feature-based model. Advantageously, feature based models typically require fewer resources than others for detection. They are also suitable to be used or deployed on edge-based sensors on trains or other devices, such as drones, robots, etc.

The true input data and/or new input data may be data collected from one or more sensors collecting data regarding the railway network, for example one or more sensors on one or more railway vehicles operating on the railway network. Advantageously, such a method can be implemented as part of the normal operation of a railway network, because the required input data can be collected during normal running of the railway vehicles.

In a third aspect there is provided a computer system configured to identify faults in a railway network, the system comprising one or more processor and storage, the storage containing processor-executable instructions which, when executed on the one or more processor(s) cause the processor(s) to perform the method of the first or second aspects, including any optional features as set out with reference thereto. In some examples, the system is installed on or forms a part of a railway vehicle. The railway vehicle comprises: a sensor configured to collect new input data relating to the railway network; and a computer configured to execute a method according to second aspect, wherein the new input data is received from the sensor. Advantageously, such a railway vehicle can accurately and reliably identify faults in the railway network during normal running of the railway vehicle.

Further aspects of the present invention provide: a computer program comprising code which, when run on a computer, causes the computer to perform the method of the first aspect; a computer program comprising code which, when run on a computer, causes the computer to perform the method of the second aspect; a computer readable medium storing a computer program comprising code which, when run on a computer, causes the computer to perform the method of the first aspect; a computer readable medium storing a computer program comprising code which, when run on a computer, causes the computer to perform the method of the second aspect; a computer system programmed to perform the method of the first aspect; and a computer system programmed to perform the method of the second aspect. For example, a computer system can be provided for identifying faults in a railway network, the system including one or more processors configured to:
receive true input data, the true input data including a representation of a verified fault in a railway network;
generate synthetic input data, based on the true input data, representing faults of the same type that may occur in the railway network;
train a first machine-learning model using the true input data and the synthetic input data, such that the machine-learning model can be used to identify faults of the same type from new input data relating to the railway network; and
apply the trained first machine-learning model to a database, and so identifying unlabelled faults represented by the new input data.

The system may be located on a railway-vehicle, or another edge device used for real-time detection. The system may be located on a server / computer which is remote to the railway network and/or railway-vehicles on the railway network.

The system thus corresponds to the method of the first aspect. The system may further include: a computer-readable medium or media operatively connected to the processors, the medium or media storing a computer program comprising code which, when run on a computer, causes the computer to perform the method of the first aspect and/or a computer program comprising code which, when run on a computer, causes the computer to perform the method of the second aspect. The system may further include: a display device for viewing the new input data in which faults are identified by the first machine-learning model.

The invention includes the combination of the aspects and preferred features described above except where such a combination is clearly impermissible or expressly avoided.

### Brief Description of the Drawings

Embodiments of the invention will now be described by way of example with reference to the accompanying drawings in which:
Figure 1 shows a flowchart of a first method of identifying faults in a railway network;
Figure 2 shows a flowchart of a second method of identifying faults in a railway network;
Figure 3 shows a flowchart of the sub-steps of a step of the method in Figure 1;
Figure 4 shows an information flow diagram corresponding to an implementation of the first method;
Figure 5 shows an information flow diagram presenting the changes in data format in a step of the first method of generating synthetic input data;
Figure 6 shows a computer system configured to identify faults in a railway network using the first method;
Figure 7 shows a computer system configured to identify faults in a railway network using the second method;
Figures 8A - 8D show a description of a verified fault in a railway system and synthetic input data for use in the first method; and
Figures 9A - 9D show a description of a verified fault in a railway system and synthetic input data for use in the first method.

### Detailed Description and Further Optional Features

Aspects and embodiments of the present invention will now be discussed with reference to the accompanying figures. Further aspects and embodiments will be apparent to those skilled in the art. All documents mentioned in this text are incorporated herein by reference

### Figure 1

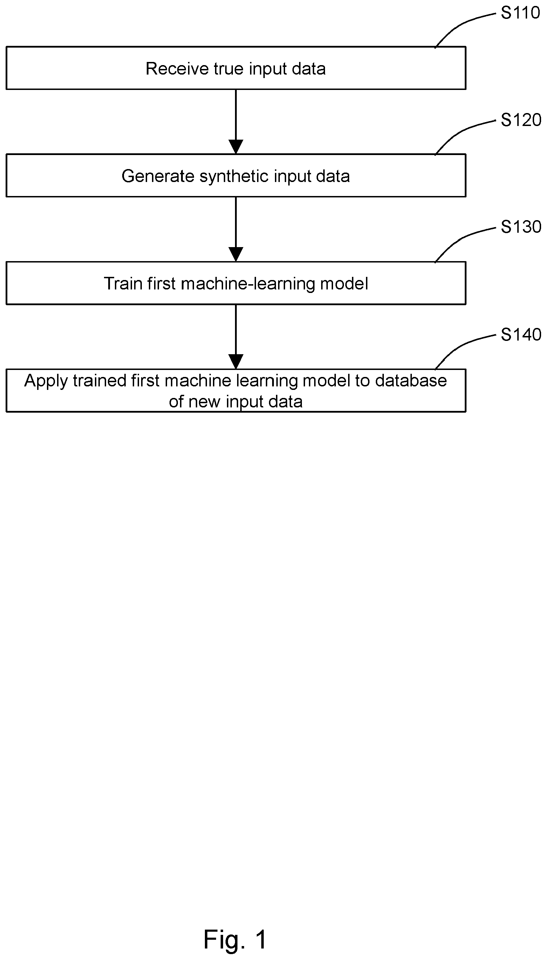

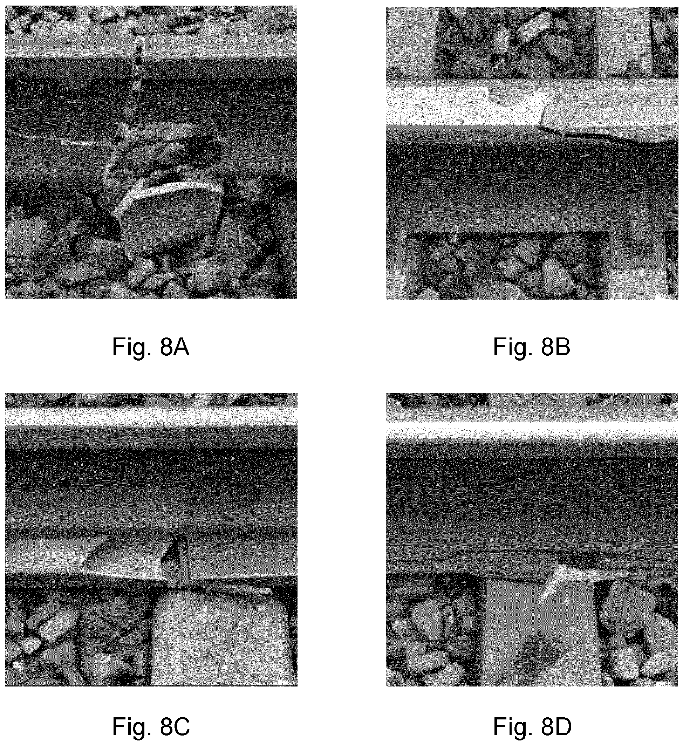

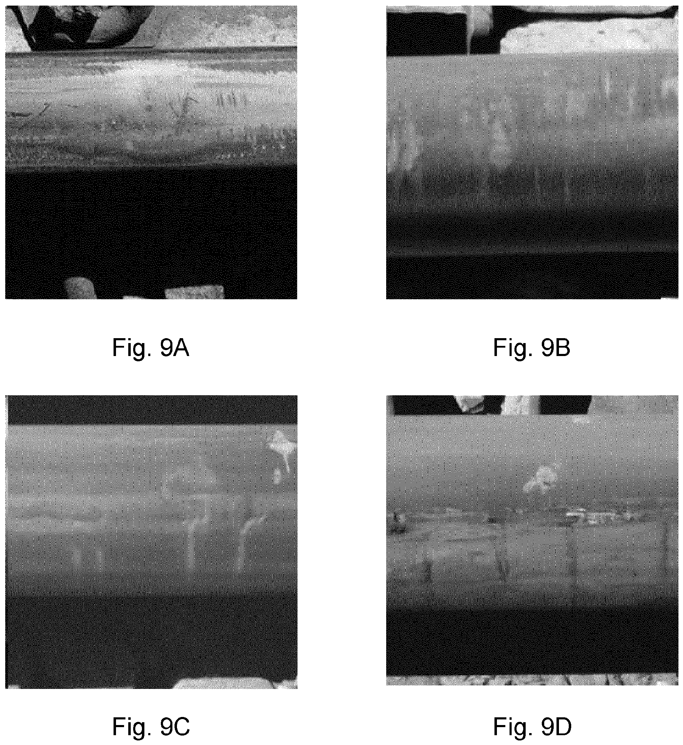

Figure 1 shows a flowchart of a first method of identifying faults in a railway network, the method being implemented on a computer. The first method comprises two stages: a first stage of training a first machine-learning (ML) model to recognise faults in a railway network from data inputted into the ML model, and a second stage of applying the first ML model to input data relating to a railway network in order to identify faults in the railway network from the input data. The first method shown in Figure 1 will be described with reference to Figures 8A - 8D and Figures 9A - 9D, which show representations of verified faults in a railway system and synthetic input data for use in training the first ML model.

At step S110, true input data is received by the computer. The true input data comprises a representation of a verified fault in a railway network, that is, the true input data has already been analysed by a human and confirmed to represent a fault in a railway network. Figures 8A and 9A provide examples of a representation of a verified fault contained within true input data, wherein the data format of the representation of a fault is image format. In Figure 8A the represented fault is a rail of a railway track that contains a fracture, and the representation in Figure 8A (i.e. the image) has already been analysed by a human and confirmed to represent a fault in a railway network. Similarly, in Figure 9A the represented fault is a rail head with a squat defect, and the representation in Figure 9A (i.e. the image) has already been analysed by a human and confirmed to represent a fault in a railway network.

A challenge with applying an ML model to true input data generated by monitoring a railway network is that the generation of the true input data is time-intensive (because of the requirement of human analysis) and the frequency of railway network faults is low, meaning that the dataset on which to train an ML model is small in size if only true input data is included in the dataset.

Therefore, in the first method, the true input data received by the computer at step S110 is used at step S120 to generate synthetic input data, based on the true input data, that represents faults that may occur in the railway network. The synthetic input data generated at Step S120 is the same type of data as the data type of the representation of the verified fault contained within the true input data received at step S110. Figures 8B - 8D, for example, show synthetic input data generated from the representation of a verified fault in Figure 8A, and, like the representation of the verified fault shown in Figure 8A, Figures 8B - 8D are image data. Similarly, Figures 9B - 9D show synthetic input data generated from the representation of a verified fault shown in Figure 9A, and, like the representation of the verified fault shown in Figure 9A, Figures 9B - 9D are image data.

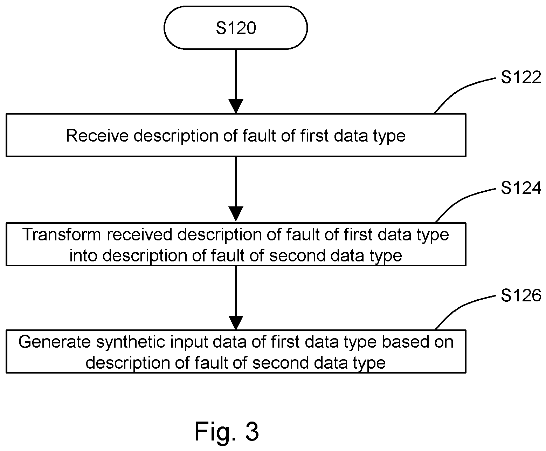

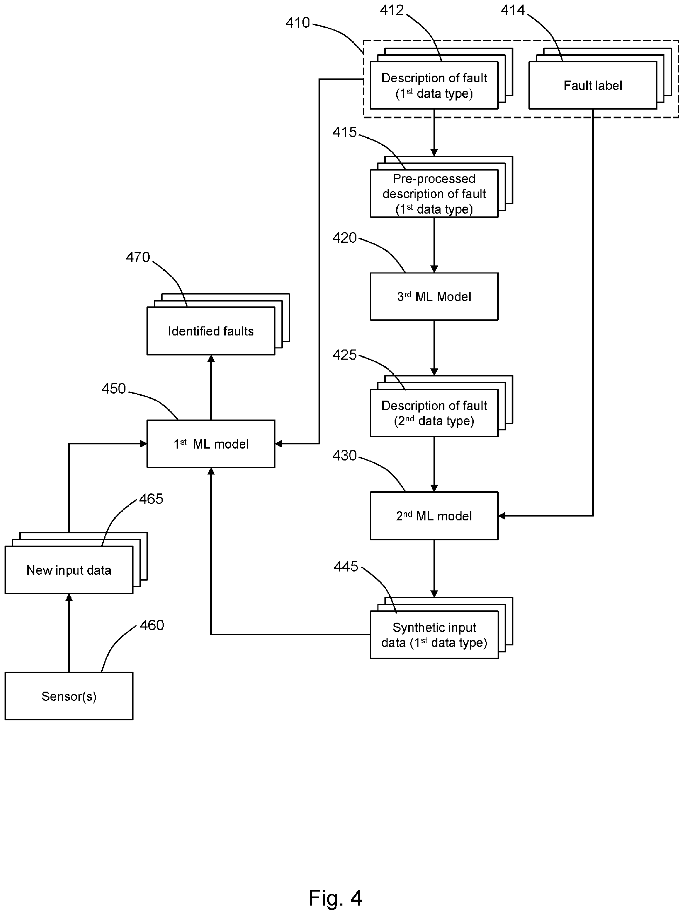

It can be appreciated from Figures 8A - 8D that the synthetic input data (Figures 8B - 8D) generated based on the true input data (Figure 8A) relates to the same type of fault: all of Figures 8A - 8D represent a fault in which the rail is fractured. However, all of Figures 8A - 8D differ from each other with respect to more specific details of the fault represented (e.g. position of the fracture on the rail, size of the fracture, whether the fracture extends all the way across the rail, etc.). The generation of the synthetic input data based on the true input data is discussed further in relation to Figures 3 and 4.

By generating synthetic input data based on the true input data, the method increases the size and variety of the dataset on which to train the first ML model for fault identification. Increasing the size and variety of the dataset is advantageous in increasing the accuracy and reliability of the first ML model in identifying faults in new input data. The true input data may comprise a plurality of representations of faults in the railway system, which is beneficial in generating a diverse dataset of synthetic input data because a broader range of starting points for generating the synthetic input data is provided by having representations of different faults in the railway system. This then results in more diverse training data on which to train the first ML model, and therefore a first ML model that is able to more accurately and reliably identify faults in a railway network.

At Step S130, the first ML model is trained using the true input data and the synthetic input data (hereinafter referred to as the training data). The first ML model may be trained via classification supervised learning and may be a feature-based model. The result of training the ML model is that the ML model can then be used to identify faults from new input data relating to the railway network. The type of fault the first ML model is able to identify from new input data is dependent on the types of fault that the first ML model has been trained on. If, for example, the first ML model has only been trained on the training data shown in Figures 8A - 8D, the first ML model will only identify rail fracture-type faults in the new input data. Therefore, it is desirable that the first ML model is trained on training data that relates to a variety of fault types.

Having trained the first ML model, the second stage of the first method of applying the first ML model to input data relating to a railway network in order to identify faults in the railway network from the input data is conducted. At step S140 the trained first ML model is applied to a database of new input data in order to identify faults in a railway network represented by the new input data. The new input data may comprise further true input data - that is, the new input data may have already been analysed by a human and confirmed to represent a fault in a railway network. This is typically done when seeking to verify the performance of the first ML model and to determine the false negative rate of the first ML model. However, more commonly, the new input data comprises data that has not previously been analysed by a human and therefore provides a representation of part of a rail network that may or may not contain a fault. By way of example, the new input data may comprise a plurality of images of parts of a rail in a train network that were taken at different positions along the rail, wherein the plurality of images have not been analysed by a human to decide whether or not a fault in the rail is present in a given image. The first ML model can be configured such that applying the first ML model to the new input data results in an output that classifies the new input data into the classes 'fault present' or 'fault not present'. Moreover, if the true input data contains both a representation of a verified fault and a corresponding fault label, the label classifying the fault in the representation (e.g. 'fracturing of track rails'; 'surface irregularities on track rails'; 'warping of track rails'; 'buckling of track rails'; 'subsidence of track'; 'sleeper failure'; 'signalling equipment failure'; 'points failure'; 'track obstruction'; 'overhead obstruction'), then the fault label can be provided to the first ML model as part of the training data and the first ML model can thus be configured to sub-classify the new input data classified as 'fault present' according to the type of fault present.

The identified faults in the new input data can then be provided to an operator of the railway network as alerts, such that the operator can take appropriate action in response to an identified fault. Action taken by the operator may include one or more of:
- Human inspection of the new input data in which the fault has been identified
- Human inspection of the portion of the railway network to which the identified fault relates;
- Halting of use of the portion of the railway network to which the identified fault relates;
- Deployment of a robot or drone to the portion of the railway network to which the identified fault relates for further inspection, scanning, and analysis, the robot or drone may be autonomous or remotely controlled by an operator;
- Highlighting the fault for monitoring (for example, for just-in-time repair); and
- Other actions, such as including a temporary speed restriction depending on the severity of the fault and maintenance response times.

### Figure 2

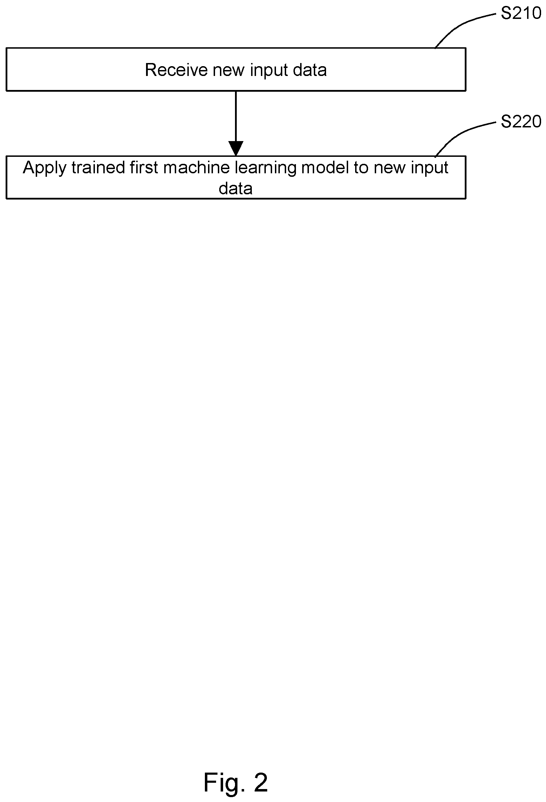

Figure 2 shows a flowchart of a second method of identifying faults in a railway network, the method being implemented on a computer. The second method can be used to identify faults in a railway network where the first ML model has already been trained according to the first stage of the first method (i.e. Steps S110 - 130).

In the second method, at step S210 new input data is received that relates to the railway network in which it is sought to identify faults. The new input data may comprise image data, video data and/or audio data. Step S220 of the second method is then substantially the same as step S140 in the first method.

### Figure 3

Figure 3 shows possible sub-steps to implement step S120 of the first method shown in Figure 1 in which synthetic input data is generated, based on the true input data, representing faults that may occur in the railway network.

At step S122, the representation of a verified fault of the first data type in the true input data is received by the computer. The first data type may be a single format of data, for example, image data, audio data, video data, numerical data, or may be a combination of formats (e.g. any combination of the above data formats). Using representations of verified faults that contain multiple data formats is beneficial in that a more comprehensive representation of the fault is provided and provides more sophisticated data with which to train the first ML model.

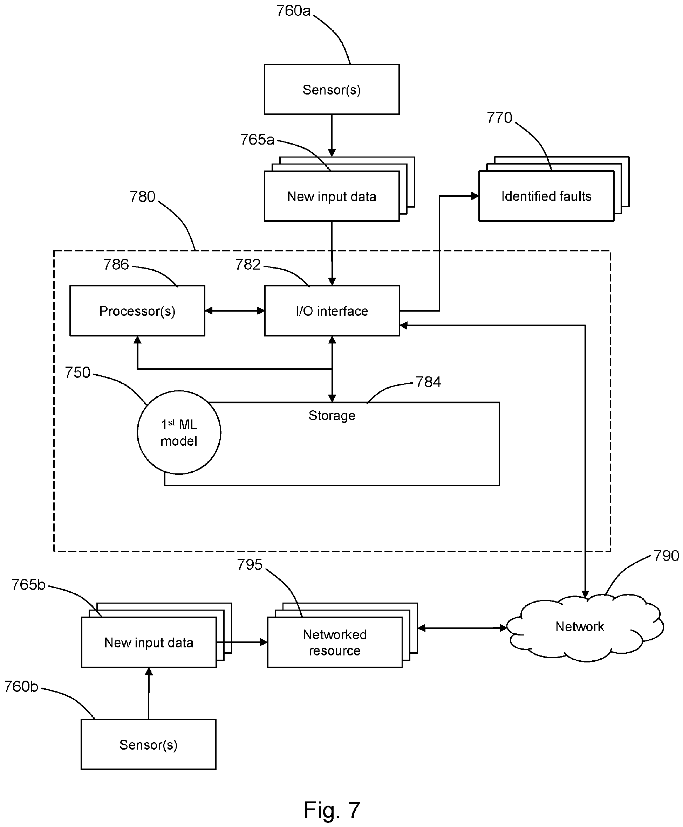

Subsequently, at step S124, the received representation of the verified fault of the first data type is transformed into a representation of the fault of the second data type. The second data type is typically textual data. By transforming the representation of the verified fault of the first data type (which may encompass several different formats) into the representation of the verified fault of the second data type, the different data formats in the representation of the verified fault of the first data type obtained using different types of sensor can be transformed into representations of the verified fault in a common data format that then facilitates the combination of representations of the verified fault with one another. Referring back to Figures 7A - 7D and 8A - 8D, for example, the images in Figures 7A and 8A show representations of verified faults of the first data type, which may then be transformed into textual descriptions of the images (i.e. a second data type) at step S124. However, the representations of verified faults of the first data type may further comprise data in other formats, for example audio data corresponding to the noise observed when a railway vehicle runs over the portion of the rail contained in the image in Figure 7A. Such audio data is also transformed into a representation of the verified fault of the second data type (e.g. textual data) at step S124.

Having transformed the true input data into the second data type, at step S126 the synthetic input data of the first data type is generated based on the representations of verified faults of the second data type from step S124. Continuing with the above example, the representation of faults in the format of textual descriptions of the images in Figures 7A and 8A (i.e. of the second data type) are used to generate synthetic input data in the form of image data (i.e. of the first data type).

Returning to the flowchart in Figure 1, where synthetic input data in the first data type has been generated, this can be combined with the representations of the faults of the first data type and provided to the first machine-learning model for training at step S130.

### Figure 4

Figure 4 shows an information flow diagram corresponding to an implementation of the first method. Whilst Figures 1 and 2 contain the basic steps of the first and second methods of the present invention, the information flow diagram illustrates a number of additional, optional, features and steps that may be included in implementations of the first and second methods. Although Figure 4 presents several optional features and steps together, each of these individual features and steps may be included in the first and/or second method separately of the other optional features and steps presented in Figure 4, except where such a separation is clearly impermissible or expressly stated as being avoided.

The true input data 410 in Figure 4 contains both a plurality of representations of verified faults of the first data type 412 and a corresponding label 414 for each representation of a verified fault, the label classifying the fault in the corresponding representation. The fault label 414 may be added to the true input data 410 when the representation is being verified as containing a fault in a railway network by a human. The classes of the fault label may be set according to the diversity of faults the computer implemented method is expected to identify in the new input data. By way of example, the classes may include track-side faults, for example one or more of 'fracturing of track rails'; 'surface irregularities on track rails'; 'warping of track rails'; 'buckling of track rails'; 'subsidence of track'; 'sleeper failure'; 'signalling equipment failure'; 'points failure'; 'track obstruction'; 'overhead obstruction'; 'track defects'; 'overhead line equipment fault'; 'embankment failure/impending failure'; 'tunnel lining/wall defect'; 'drainage issue' etc.

In Figure 4, the representation of verified faults of the first data type 412 undergoes pre-processing to provide a pre-processed representation of the verified fault of the first data type 415 that is suitable for use in the generation of synthetic input data. The pre-processing may include cropping and/or splitting the representation of the verified fault of the first data type 412 such that smaller packages of pre-processed data are used when generating the synthetic input data 445.

The pre-processed representations of the verified faults of the first data type 415 are then sent to the third ML model 420, which is configured to transform a pre-processed representation of a verified fault of the first data type 415, or a representation of a verified fault of the first data type 412 when no pre-processing is performed, into a representation of the verified fault of the second data type 425. That is, the third ML model 420 in Figure 4 is configured to conduct step S124 in Figure 3 described above. The third ML model may be a text-encoder, which generates textual-descriptions and/or captions from images. The third ML Model may be based on CLIP as disclosed in arXiv:2111.09734.

Subsequently, the representations of verified faults of the second data type 425 are sent to a second ML model 430, which is configured to generate synthetic input data of the first data type 445 based on the representations of verified faults of the second data type 425. That is, the second ML model 430 in Figure 4 is configured to conduct step S126 in Figure 3 described above. The second ML model 430 may be a diffusion model or generative machine learning model, and may in particular be a generative-adversarial-network model or a transformer model. Diffusion models work by destroying training data by adding noise, and then learning to recover the data by reversing this noising process. Where the representations of verified faults of the second data type 425 contain textual format data, the second ML model may implement natural language processing as part of the generation of synthetic input data of the first data type 445. Advantageously, generating synthetic input data, for example by means of a text-to-image conversion using an ML model, removes human bias from the process of generating synthetic input data.

In Figure 4, the second ML model 430 also receives the label 414 that corresponds to each representation of a verified fault of the second data type 425 received by the second ML model 430. The second ML module 430 can use the fault label 414 in addition to the representation of the verified fault of the first data type 435 when generating the synthetic input data of the first data type 445, for example, by natural language processing of the textual data in the fault label 414. Use of the fault label 414 when generating synthetic input data of the first data type 445 allows synthetic input data to be generated that is in the same class of fault as the fault represented in the true input data 510, thereby improving the reliability and accuracy of the method in identifying unlabelled faults in new input data.

Subsequently, the synthetic input data in the first data type 445 and the representations of verified faults of the first data type 412 in the true input data 410 are sent to the first ML model 450. The synthetic input data of the first data type 445 and the representations of the verified faults of the first data type 412 are combined to provide the training data and the first ML model 450 is applied to this training data in order to train the first ML model 450, such that the first ML model 450 can be used to identify unlabelled faults in new input data 445 relating to the railway network that has been obtained by a sensor 460. The first ML model 450 may be trained via classification supervised learning and may be a feature-based model.

In Figure 4, one or more sensors 460 are configured to collect new input data 465 relating to the railway network. The new input data 465 is of the first data type. This new input data 465 is send to the first ML model 450 after training of the first ML model on the representations of verified faults of the first data type 412 and the synthetic input data of the first data type 445, such that the first ML model 450 can be applied to the new input data 465 in order to identify faults represented in the new input data 465.

The identified faults 470 can then be provided to an operator of the railway network as alerts, such that the operator can take appropriate action in response to an identified fault. Action taken by the operator may include one or more of:
- Human inspection of the new input data in which the fault has been identified
- Human inspection of the portion of the railway network to which the identified fault relates;
- Halting of use of the portion of the railway network to which the identified fault relates;
- Deployment of a robot or drone to the portion of the railway network to which the identified fault relates for further inspection, scanning, and analysis, the robot or drone may be autonomous or remotely controlled by an operator;
- Highlighting the fault for monitoring (for example, for just-in-time repair); and
- Other actions, such as including a temporary speed restriction depending on the severity of the fault and maintenance response times.

### Figure 5

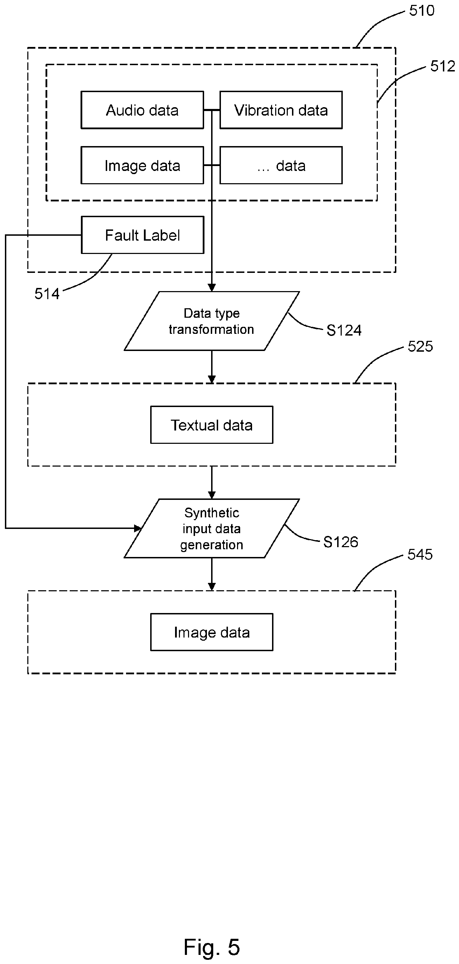

A plurality of sensors may be used to obtain the true input data, each of which may collect a different format of data, for example a camera to obtain data in an image format, a microphone to obtain data in an audio format, an accelerometer to obtain vibration data in a numerical format. Accordingly, the representation of the fault 512 in the true input data 510 may comprise one or more data formats. The different data formats present in the representation of the fault 512 form the first data type. Figure 5 provides an example of how different data types containing different data formats may be handled according to the first method.

In Figure 5, a representation of a verified fault of the first data type 512 in the true input data 510 includes audio format data, image format data and numerical format data. The step of generating the synthetic input data (step S120 in Figure 1) then includes transforming the representation of the verified fault of the first data type 512 into a representation of the verified fault of the second data type 525. In Figure 5, the representation of the verified fault of the second data type 525 is in a single data format: in this example, textual data. Textual data is not a data format present in the representation of the verified fault of the first data type 512. As described in relation to Figure 4, the transformation of the representation of the verified fault of the first data type 512 into the representation of the verified fault of second data type 525 may be conducted by the third ML model. A single third ML model may be configured to carry out the transformation for multiple different data formats present in the true input data of the first data type 512. However, it is also possible for the third ML model to be implemented as plural ML sub-models, each of which is configured to carry out the transformation for a specific data format present in the true input data of the first data type 512 (e.g. a first ML sub-model for transformation of image format data into textual data and a second ML sub-model for transformation of audio format data into textual data).

The representation of the verified fault of the second data type 525 is then used for the generation of synthetic input data of the first data type 535. In Figure 5, the synthetic input data of the first data type 545 generated is, in this example, image format data and the representation of the verified fault of the second data type 525 on which that generation is based is textual format data. In other examples the first data type may be something other than image format data, for example audio data. Additionally, in Figure 5 the true input data 510 comprises a fault label 514 corresponding to the representation of the verified fault, the label classifying the fault in the corresponding representation. In such a case, the generation of synthetic input data of the first data type 535 may be based on the representation of a verified fault of the second data type 525 and the fault label 514. Use of the fault label 514 when generating synthetic input data of the first data type 545 allows synthetic input data to be generated that is in the same class of fault as the fault represented in the true input data 510, thereby improving the reliability and accuracy of the method in identifying unlabelled faults in new input data. As described in relation to Figure 4, the generation of the synthetic input data of the first data type 535 may be conducted by the second ML model.

In order to improve the accuracy and reliably with which the first ML model can identify faults in the railway network in unlabelled new input data, the first ML model may be trained on training data that contains the same data formats within that same data type as the data formats in the new input data.

In Figure 5, the synthetic input data of the first data type 545 only includes a single data format: image data, whilst, the representation of a verified fault of the first data type 512 from which the synthetic input data of the first data type 512 is derived contains a plurality of data formats (image data, audio data, vibration data, etc.). If the new input data contains only image format data, it is acceptable that the synthetic input data of the first data type 545 only contains image format, because the synthetic input data 545 and the image data within the true input data 510 can be provided to the first ML model for training, such that the first ML model is only trained on data that is in the same format as the new input data that the first ML model will subsequently be applied to.

The first ML model is able to provide more accurate identification of faults in the railway network where it is trained on, and applied to, data of a single format (e.g. one of image data format, audio data format, etc.), rather than being trained on, and applied to, a data in a mixture of formats (i.e. the first ML model can be made more specialised in relation to a single format of data).

However, using new input data containing a variety of data formats can be advantageous in that it provides a more comprehensive representation of part of the railway network and therefore increases the probability of detecting a fault that may not be detected if only a single data format was considered. If the new input data contains a plurality of data formats (e.g. image data and audio data), for example, where the new input data is obtained from a plurality of sensors, then the steps of generating the synthetic input data and training the first ML model may be modified from the above representation relating to Figure 5:
The first ML model may be trained on training data that comprises a mixture of different data formats. By way of example, the representations of verified faults of the first data type 512 may comprise or consist of audio data and the synthetic input data of the first data type 545 may comprise or consist of image data, or the representations of verified faults of the first data type 512 and the synthetic input data of the first data type 545 may each comprise or consist of image data and audio data. Training the first ML model in this way then facilitates the application of the first ML model to new input data of the first data type that contains multiple data formats that are the same data formats that were present in the training data.
Alternatively, the first ML model may be implemented as plural ML sub-models. In such a case, the synthetic input data of the first data type 545 and the representations of verified faults of the first data type 512 can together contain more than one data format and each ML model making up the first ML model may be trained on a different data format within the training data. Then, data in a given format within the new input data of the first data type can be processed by the corresponding ML sub-model within the first ML model. Thus, each ML sub-model can be specialised in processing a given format of new input data.

### Figure 6

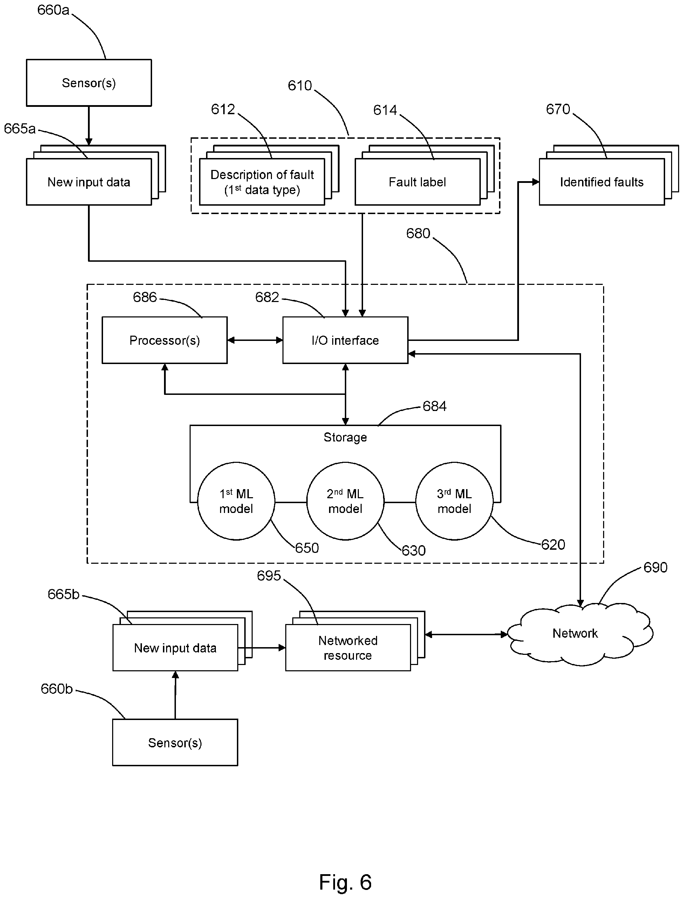

Figure 6 shows a computer system 680 for identifying faults in a railway network and the connections of the computer system to different sources of external information. The computer system 680 comprises an input/output (I/O) interface 682 that facilitates the sending and receiving of information by the computer system 680. Within the computer system 680, the I/O interface 682 is in communication with a storage medium 684 and one or more processors 686. External to the computer system 680, the I/O interface 682 is in communication with a source of true input data 610 containing a representation of a verified fault in a railway system 612 and a corresponding label 614 classifying the fault in the representation 612. The I/O interface is further connected to one or more sensor(s) 660 configured to collect and provide new input data 665 to which the first ML model 650 is configured to be applied. Additionally, the I/O interface 682 allows the computer system 680 to connect to a networked resource 695 via a network 690. In Figure 6, new input data 665 is provided to the I/O interface 682 via two pathways: new input data 665a is provided locally from sensor(s) 660a; and new input data 665b from sensor(s) 660b is provided to the I/O interface 682 via the network 690, with the new input data 665b being stored as a networked resource 695 that the I/O interface 682 can access via the network 690. A computer system 680 configured to execute the second method may obtain new input data 665 by one, or both, of the aforementioned pathways. If the computer system 680 is implemented on a railway vehicle having a sensor 660, for example, that sensor may provide the new input data it generates to the computer system locally. However, if the computer system 680 were to be implemented in a different location to a sensor 660, for example, if the sensor was implemented on a railway vehicle but the computer system 680 was implemented in a control centre, then it may be beneficial to provide the new input data from the sensor 660 to the computer system 680 via the network 690.

Similarly, in Figure 6 the true input data 610 is shown as being provided to the I/O interface 682 locally, but may also, or alternatively, be provided to the I/O device 682 via the network 690 as a networked resource 695.

The storage medium 684 stores one or more computer programs which, when run on the processor 686, causes the execution of the first method. The storage medium 684 is further configured to locally store true input data 610 and new input data 665 received from the I/O interface 682 and synthetic input data generated during the execution of the computer program in one or more databases. The storage medium 684 further contains the first, second and third ML models 650, 630, 620. The requirement for the second and third ML models 620, 630 to be present in the storage medium is dependent on the implementation of the first method by the computer system 680. It is possible for the first ML model 650 to be trained according to the first method absent one or both of the second and third ML models 620, 630, in which case one or both of those ML models need not be present in the storage medium 684.

### Figure 7

Figure 7 shows a computer system 780 for identifying faults in a railway network and the connections of the computer system to different sources of external information. The computer system shown in Figure 7 is substantially the same as the computer system shown in Figure 7: it comprises an I/O interface 782, a storage medium 784 storing the first ML model 750 and a processor 786, and the computer system 780 is connected to a networked resource 795 via a network 790. In Figure 7 the storage medium 784 stores one or more computer programs which, when run on the processor 786, causes the execution of the second method. The storage medium 784 is further configured to locally store new input data 665 received from the I/O interface 682 in one or more databases. Thus, the I/O interface 782 of the computer system 780 does not need to be in communication with a source of true input data, because the process of training the first ML model stored in the storage medium 784 has already been undertaken. The process of training the first ML model 750 may have been undertaken by the computer system 780, or the trained first ML model 750 may have been provided to the first computer system 780 from an external resource, for example the networked resource 795 via the network 790.

If the process of training the first ML model 750 was undertaken by the computer system 780 using the second and third ML models 730, 720, these ML models may also be stored in the storage medium 784. However, the first ML model 750 may have been trained by the computer system 780 without the use of one or both of the second and third ML models 730, 720, in which case one or both of those ML models may not be present in the storage medium 784. Alternatively, the second and third ML models 730, 720 may not be present in the storage medium 784 because the first ML model 750 stored in the storage medium 784 has been trained elsewhere and is simply provided for the computer system 780 to use.

In Figure 7, new input data 765 is provided to the I/O interface 782 via two pathways: new input data 765a is provided locally from sensor(s) 760a; and new input data 765b from sensor(s) 760b is provided to the I/O interface 782 via the network 790, with the new input data 765b being stored as a networked resource 795 that the I/O interface 782 can access via the network 790. A computer system 780 configured to execute the second method may obtain new input data 765 by one, or both, of the aforementioned pathways. If the computer system 780 is implemented on a railway vehicle having a sensor 760, for example, that sensor may provide the new input data it generates to the computer system locally. However, if the computer system 780 were to be implemented in a different location to a sensor 760, for example, if the sensor was implemented on a railway vehicle but the computer system 780 was implemented in a control centre, then it may be beneficial to provide the new input data from the sensor 760 to the computer system 780 via the network 790.

The features disclosed in the description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

All references referred to above are hereby incorporated by reference.

### List of Features

- 410,510,610: true input data
- 412, 512, 612: representation of verified fault of first data type
- 414,514,614: fault label
- 420, 620: third machine-learning model
- 425, 525: representation of verified fault of second data type
- 430, 630: second machine-learning model
- 445, 545: synthetic input data of first data type
- 450, 650, 750: first machine learning model
- 460, 660a, 660b, 760a, 760b: sensor(s)
- 465, 665a, 665b, 765a, 765b: new input data
- 470, 670, 770: identified faults

## Claims

1. A computer-implemented method of identifying faults in a railway network, comprising the steps of:
receiving true input data, the true input data including a representation of a verified fault in a railway network;
generating synthetic input data, based on the true input data, representing faults that may occur in the railway network;
training a first machine-learning model using the true input data and the synthetic input data, such that the machine-learning model can be used to identify faults from new input data relating to the railway network; and
applying the trained first machine-learning model to a database, and so identifying faults represented by the new input data.

2. The computer implemented method according to claim 1, wherein the database comprises further true input data.

3. A computer implemented method of identifying faults in a railway network, comprising:
receiving new input data, the new input data relating to the railway network; and
applying a trained first machine-learning model to the new input data to identify unlabelled faults represented by the new input data;
wherein the first machine-learning model has been trained by the steps of:
receiving true input data, the true input data including a representation of a verified fault in a railway network;
generating synthetic input data, based on the true input data, representing faults that may occur in the railway network; and
training the first machine-learning model using the true input data and the synthetic input data, such that the machine-learning model can be used to identify faults from new input data relating to the railway network.

4. The computer implemented method of claim 3, wherein the new input data is in a database and the trained first machine-learning model is applied to the database.

5. The computer implemented method according to any preceding claim, wherein:

6. The computer implemented method according to any preceding claim, wherein the step of generating the synthetic input data is performed by providing the true input data to a second machine-learning model that is a generative machine-learning model.

7. The computer implemented method according to claim 6, wherein the generative machine-learning model is a transformer machine-learning model.

8. The computer implemented method according to any preceding claim, wherein the step of generating the synthetic input data includes:
transforming the representation of a verified fault in the true input data from a first data type into a second data type; and
generating synthetic input data based on the true input data of the second data type.

9. The computer implemented method according to claim 8, wherein transforming the representation of a verified fault of the first data type in the true input data into the representation of a verified fault of the second data type is performed via a third machine-learning model.

10. The computer implemented method according to claim 8 or 9, wherein:
the synthetic input data generated based on the true input data of the second data type is synthetic input data of the first data type; and
the new input data is of the first data type.

11. The computer implemented method according to any of claims 8 - 10, wherein:
the first data type comprises one or more of:
an image data format;
a video data format;
an audio data format; and
a numerical data format; and
the second data type comprises a textual data format.

12. The computer implemented method according to any preceding claim, wherein the first machine-learning model is a feature-based model.

13. The computer implemented method according to any preceding claim, wherein the true input data and/or new input data is data collected from one or more sensors on one or more railway vehicles operating on the railway network.

14. The computer implemented method according to any preceding claim, wherein the new input data and/or the representation of a verified fault in the true input data is audio data and/or video data.

15. A computer system configured to identify faults in a railway network, the system comprising one or more processors and storage, the storage containing processor-executable instructions which, when executed on the one or more processor(s), cause the processor(s) to perform the method of any preceding claim.
